# EUROPÄISCHE PATENTSCHRIFT

(11) **EP 3 719 539 B1**
(45) Veröffentlichungstag und Bekanntmachung des Hinweises auf die Patenterteilung: **24.06.2026**
(21) Anmeldenummer: 20166203.8
(22) Anmeldetag: 27.03.2020
(51) Int. Cl.: G01S 17/89, G06T 7/70, B25J 9/16, G06T 15/00, G06T 17/00, G01B 11/24, G01B 11/25, G01B 21/04, G01S 7/497, G01S 17/42, G01S 17/894

(54) **VORRICHTUNG UND VERFAHREN ZUM DREIDIMENSIONALEN ERFASSEN WENIGSTENS EINES OBJEKTS**
DEVICE AND METHOD FOR THREE-DIMENSIONALLY DETECTING AT LEAST ONE OBJECT
DISPOSITIF ET PROCÉDÉ DE DÉTECTION TRIDIMENSIONNELLE D'AU MOINS UN OBJET

(30) Priorität: 01.04.2019 DE 102019108426
(43) Veröffentlichungstag der Anmeldung: 07.10.2020
(73) Patentinhaber: Fraunhofer-Gesellschaft zur Förderung der angewandten Forschung e.V., 80686 München (DE)
(72) Erfinder: Leidinger, Markus, 79100 Freiburg (DE); Reiterer, Alexander, 79379 Müllheim (DE)

(56) Entgegenhaltungen:
- EP-A1- 3 273 266
- DE-A1- 102016 206 982
- V. SEQUEIRA ET AL: "Automated reconstruction of 3D models from real environments", ISPRS JOURNAL OF PHOTOGRAMMETRY AND REMOTE SENSING, vol. 54, no. 1, 1 February 1999 (1999-02-01), pages 1 - 22, XP055110110, ISSN: 0924-2716, DOI: 10.1016/S0924-2716(98)00026-4

## Beschreibung

Die Erfindung betrifft eine Vorrichtung zum dreidimensionalen Erfassen wenigstens eines Objekts gemäß dem Oberbegriff des Anspruchs 1.

Die Erfindung betrifft weiterhin ein Verfahren zum dreidimensionalen Erfassen wenigstens eines Objekts.

Eine derartige Vorrichtung ist aus DE 10 2016 206 982 A1 bekannt.

Die vorbekannte Vorrichtung zum dreidimensionalen Erfassen wenigstens eines Objekts verfügt über eine optische Abstandsmesseinheit einer Scannereinrichtung, mit der mit einem Messstrahl an Messpositionen punktweise in Gestalt von Raumpunktdaten der Raumwinkel und der Abstand zu Messpunkten auf wenigstens ein Objekt aufweisenden Beaufschlagungsbereichen bestimmbar sind. Weiterhin sind eine Bildaufnahmeeinheit der Scannereinrichtung vorhanden, mit der zweidimensionale Messbilder als Intensitätsdaten erfassbar sind. Mit einer Rekonstruktionseinheit, die mit der Abstandsmesseinheit sowie mit der Bildaufnahmeeinheit in Verbindung steht, ist durch Überlagern der Raumpunktdaten sowie der Intensitätsdaten eine dreidimensionale Darstellung des oder wenigstens eines Objekts erzeugbar. Dabei ist die Abstandsmesseinheit an jeder Messposition dazu eingerichtet, den Messstrahl so auszusenden, dass auf den von dem Messstrahl beaufschlagten Beaufschlagungsbereichen wenigstens ein definiertes Messmuster aus mit hoher Intensität beaufschlagten Subbereichen und nicht oder gegenüber den Subbereichen mit hoher Intensität mit geringerer Intensität beaufschlagten Subbereichen gebildet ist. Das zeitliche Auflösungsvermögen der Bildaufnahmeeinheit ist gegenüber einer Scanngeschwindigkeit der Abstandsmesseinheit geringer. Weiterhin ist die Bildaufnahmeeinheit dazu eingerichtet, die Beaufschlagungsbereiche mit dem oder einem Messmuster als Messmusterbilder zu erfassen, während die Rekonstruktionseinheit dazu eingerichtet ist, durch aufeinanderfolgendes Überlagern von Raumpunktdaten und Messbildern zum einen eine räumliche Bewegung der Abstandsmesseinheit sowie der Bildaufnahmeeinheit zwischen Messpositionen zu bestimmen und zum anderen durch Überlagern von Raumpunktdaten sowie von Messmusterbildern das oder wenigstens ein Objekt in einem raumfesten Koordinatensystem zu erfassen.

Aus EP 3 273 266 A1 sind eine Vorrichtung und ein Verfahren zur Oberflächenuntersuchung aus der Luft bekannt, bei denen ein unbemanntes Fluggerät zum Einsatz kommt. Das Fluggerät verfügt über Farbbildaufnahmemittel zum automatischen Aufnehmen von Farbbildern einer Anzahl von Bereichen auf der Oberfläche und über 3D-Abstandsmessmittel zum automatischen Erfassen von dreidimensionalen Abstandsdaten der Anzahl von Bereichen auf der Fläche und über Raumpositioniermittel. Weiterhin sind Verarbeitungsmittel vorhanden, um die Farbbilddaten dahingehend zu verarbeiten, um darin charakteristische Bildpunkte der Oberfläche zu identifizieren, wobei die dreidimensionalen Abstandsdaten mit jedem der identifizierten charakteristischen Bildpunkte mit ihrem dreidimensionalen Abstandswerten korreliert werden, so dass eine Wolke von korrelierten Punkten bereitgestellt wird. Die räumlichen Positionsdaten werden, um wenigstens jedes der aufgenommenen Farbbilder räumlich zu referenzieren.

Eine weitere Vorrichtung zum dreidimensionalen Erfassen wenigtens eines Objekts und ein mit einer derartigen Vorrichtung durchführbares Verfahren sind aus dem wissenschaftlichen Artikel "Automated reconstruction of 3D models from real environments" von V. Sequeira, K. Ng, E. Wolfart et al., ISPRS Journal of Photogrammetry & Remote Sensing 54 (1999), Seiten 1 bis 22, bekannt. Bei dieser vorbekannten Vorrichtung ist eine optische Abstandsmesseinheit vorgesehen, mit der mit einem Messstrahl an Messpositionen punktweise in Gestalt von Raumpunktdaten der Raumwinkel und der Abstand zu Messpunkten auf wenigstens ein Objekt aufweisenden Beaufschlagungsbereichen bestimmbar sind. Weiterhin ist eine Bildaufnahmeeinheit vorhanden, mit der zweidimensionale Bilder der Oberflächenbereiche des oder wenigstens eines Objekts als Intensitätsdaten erfassbar sind. Die vorbekannte Vorrichtung ist weiterhin mit einer Rekonstruktionseinheit ausgestattet, die mit der Abstandsmesseinheit sowie mit der Bildaufnahmeeinheit in Verbindung steht und mit der durch Überlagern der Raumpunktdaten sowie der Intensitätsdaten eine dreidimensionale Darstellung des oder wenigstens eines Objekts dadurch erzeugbar sind, dass die aus den Intensitätsdaten gewonnene Textur mit den Raumpunktdaten überlagert wird. Dadurch lassen sich sehr realistische dreidimensionale Wiedergaben von insbesondere auch kleinere Objekte enthaltenden Szenen bereitstellen.

Aus dem Dokument "TrackSense: Infrastructure Free Precise Indoor Positioning Using Projected Patterns" von M. Köhler, S. N. Patel, J. W. Summet et al., erschienen als Konferenzbeitrag in Pervasive Computing, LNCS, Band 4480, Seiten 334 bis 350, ist zum Erzeugen eines raumeigenen Koordinatensystems für eine Innenraumnavigation bekannt, optisch eine Gitterstruktur auf winklig zueinander ausgerichtete Beaufschlagungsbereiche zu projizieren.

Aus FR 2 729 236 A1 ist ein Verfahren zum Positionieren eines Roboters durch Vergleich eines aktuellen Bildes mit einem Zielbild als Referenz bekannt.

Aus GB 2 405 465 A ist ein Verfahren zum Bestimmen einer Verschiebung in Bezug auf eine Oberfläche in Echtzeit bekannt, um einem Roboter das Auffinden eines Ziels in seinem Arbeitsumfeld zu gestatten.

Aus US-A-5,644,139 ist eine Vorrichtung und ein Verfahren zum Erzeugen eines aus einem Abtasten gewonnenen elektronischen Bildes unter Verwendung von Navigationsinformation bekannt. Gemäß diesem Dokument werden aufeinanderfolgende Bilder miteinander verglichen, wobei zum Verringern der Fehlerakkumulation aktuelle Bilder mit wesentlich früher aufgenommenen Bildern verglichen werden.

Aus US,7,205,521 B2 ist bekannt, für eine Navigation in drei Dimensionen die Bewegung eines Speckle-Musters zu verwenden.

Aus US 7,737,948 B2 ist ein Navigationssystem bekannt, welches aufeinanderfolgend aufgenommene Speckle-Bilder nutzt.

Aus der Habilitationsschrift "Indoor Position Technologies" von Dr. Rainer Mautz zum Erlangen der Venia Legendi in "Positioning and Engineering Geodesy", eingereicht im Februar 2012 bei der ETH Zürich, Schweiz, sind in dem Kapitel "4 Cameras" einer Reihe von Techniken zur Referenzierung bei der sogenannten Indoor-Navigation zusammenfassend dargestellt.

Der Erfindung liegt die Aufgabe zugrunde, eine Vorrichtung der eingangs genannten Art und ein Verfahren zum dreidimensionalen Erfassen wenigstens eines Objekts anzugeben, mit denen das oder wenigstens ein Objekt auf der Grundlage eines optisch erzeugten, systemeigenen Koordinatensystems auch hochkomplexe dreidimensionale Objekte mit sehr hoher Genauigkeit insbesondere auch bezüglich der räumlichen Daten zu erfassen.

Diese Aufgabe wird bei einer Vorrichtung der eingangs genannten Art erfindungsgemäß mit den kennzeichnenden Merkmalen des Anspruchs 1 gelöst.

Diese Aufgabe wird bei einem erfindungsgemäßen Verfahren mit den Merkmalen des Anspruchs 6 gelöst.

Der wesentliche Kern der Vorrichtung und des Verfahrens gemäß der Erfindung besteht darin, dass mit dem Messstrahl der optischen Abstandsmesseinheit sowohl ein Erfassen von Raumpunktdaten als auch ein aktives Beaufschlagen des oder wenigstens eines Objekts in Beaufschlagungsbereichen mit den Messstrahlen in Gestalt wenigstens eines hinreichend komplexen Messmusters mit unterschiedlich hellen Subbereichen erfolgt, das ein wenigstens zeitweilig Wände eines Kalibrierraums im Beaufschlagungsbereich beaufschlagendes Kalibriermuster überlagert. Dieses wenigstens eine definierte Messmuster lässt mit einer kalibrierten Scannereinrichtung unter Eliminieren von Bewegungsunschärfen bei Bewegen der Scannereinrichtung das Bestimmen der Topographie im Sinne der Gesamtheit der dreidimensionalen Gestalt des oder eines Objekts zu, indem an Messpositionen gewonnene Intensitätsdaten wenigstens einmal und dabei vorzugsweise zu Beginn mit den Intensitätsdaten einer Referenzposition abgeglichen werden. Dadurch lässt sich ein auch hochkomplexes Objekt sogar bei Bewegen der beispielsweise auf ein Fluggerät montierten Scannereinrichtung dreidimensional erfassen und insbesondere in seinen räumlichen Dimensionen sehr präzise in Gestalt von Raumpunktdaten als systemeigene Raumkoordinaten repräsentieren.

Weitere zweckmäßige Ausgestaltungen und Vorteile der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen mit Bezug auf die Figuren der Zeichnung. Es zeigen:
- Fig. 1: in einer schematischen Ansicht ein Ausführungsbeispiel einer Vorrichtung gemäß der Erfindung mit einer Abstandsmesseinheit und mit einer Bildaufnahmeeinheit, die in einer Scannereinrichtung integriert sind,
- Fig. 2: in einer detaillierten Darstellung eine Anzahl von von der Abstandsmesseinheit ausgesendeten Messstrahlen zum Erzeugen von Raumpunktdaten,
- Fig. 3: in einer perspektivischen Ansicht die Scannereinheit gemäß Fig. 1 in einer beispielhaften Referenzposition beim Beaufschlagen von drei Beaufschlagungsbereichen mit Messmustern,
- Fig. 4: in einer perspektivischen Ansicht eine eine Abstandsmesseinheit und eine Bildaufnahmeeinheit aufweisende Scannereinheit, die an einer Drohne als Fluggerät montiert ist, beim dreidimensionalen Erfassen eines Luftfahrzeugs als Beispiel für ein Objekt,
- Fig. 5 bis Fig. 7: in schematischen Darstellungen die Situation an verschiedenen Messpositionen beim dreidimensionalen Erfassen des Luftfahrzeugs gemäß Fig. 4,
- Fig. 8: in einer schematischen Darstellung die Vorgehensweise beim Verarbeiten der von der Abstandsmesseinheit gewonnenen Raumpunktdaten und der von der Bildaufnahmeeinheit gewonnenen Intensitätsdaten,
- Fig. 9: in einer anschaulichen Darstellung die Problematik der Doppeldeutigkeit eines relativen Versatzes zwischen der Oberfläche eines Objekts und einer Scannereinheit,
- Fig. 10: in einer perspektivischen Darstellung eine Ausführung einer erfindungsgemäßen Vorrichtung mit einer an einem beweglichen Roboterarm angebrachten Scannereinrichtung mit einer Abstandsmesseinheit und mit einer Bildaufnahmeeinheit,
- Fig. 11: in einer perspektivischen Darstellung eine Ausführung einer feststehenden Scannereinheit mit einer Abstandsmesseinheit und mit einer Bildaufnahmeeinheit beim Erfassen von auf einem gegenüber der Scannereinheit beweglichen Förderband angeordneten Objekten und
- Fig. 12: in einer perspektivischen Darstellung eine Ausführung einer Scannereinheit mit einer Abstandsmesseinheit und mit einer Bildaufnahmeeinheit beim Erfassen einer Gebäudefassade als Objekt.

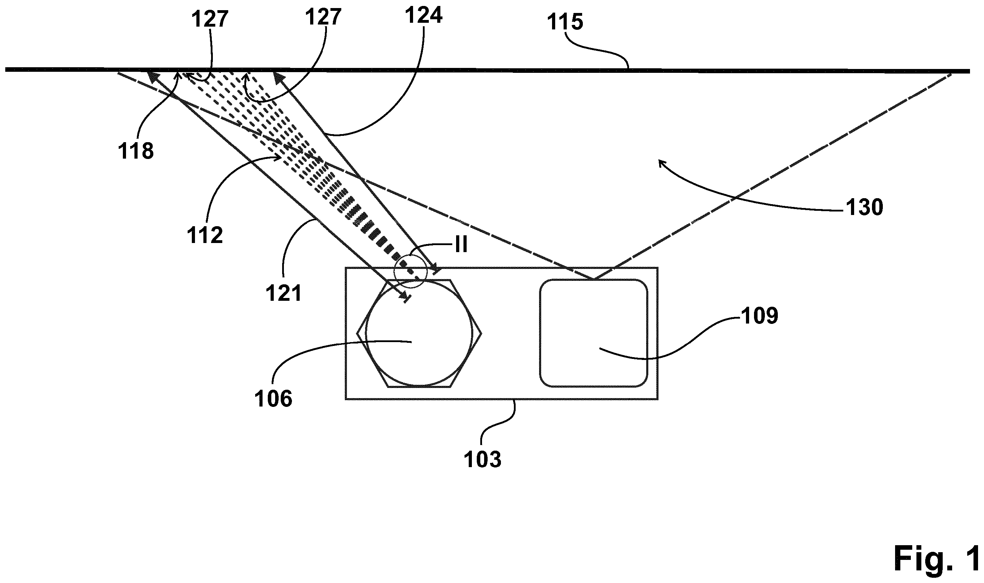

Fig. 1 zeigt in einer schematischen Ansicht ein Ausführungsbeispiel einer Vorrichtung gemäß der Erfindung, die über eine Scannereinrichtung 103 mit einem Laserscanner 106 als optischer Abstandsmesseinheit und über eine Kamera 109 als Bildaufnahmeeinheit verfügt.

Mit dem Laserscanner 106 sind in einem Raumwinkel Laserstrahlen 112 als Messstrahlen aussendbar, die beispielsweise eine Wand 115 in Beaufschlagungsbereichen 118 beaufschlagen. Der Laserscanner 106 ist unter Verwendung von an sich bekannten Techniken wie Lichtlaufzeitmessung dazu eingerichtet, Abstände 121, 124 zu in Beaufschlagungsbereichen 118 liegenden Raumpunkten 127 als Messpunkte zu bestimmen.

Mit der Kamera 109 wiederum ist die der Kamera 109 zugewandte, die von den Laserstrahlen 112 beaufschlagten Beaufschlagungsbereiche 118 aufweisende Seite der Wand 115 in einem Sichtbereich 130 in Gestalt von zweidimensionalen Bildern als Intensitätsdaten erfassbar.

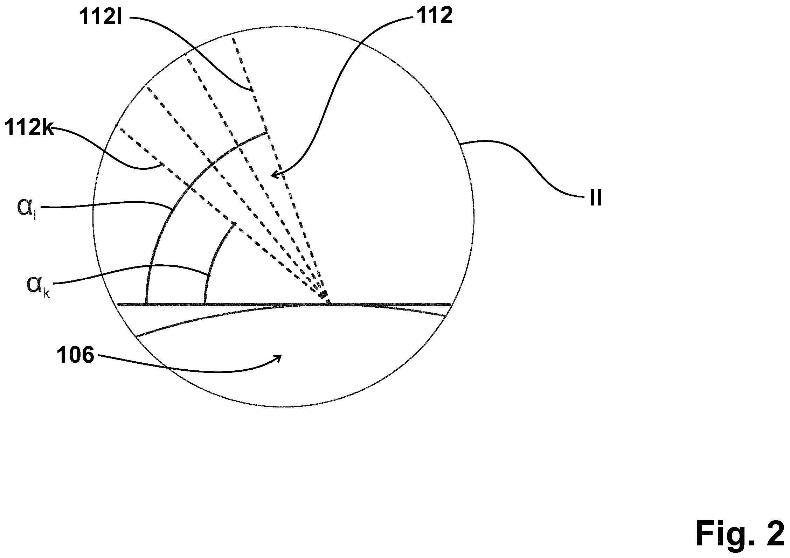

Fig. 2 zeigt in einer anschaulichen Ansicht einen in Fig. 1 mit einem Kreis II umrandeten Bereich des Ausführungsbeispiels gemäß Fig. 1. Aus Fig. 2 ist ersichtlich, dass die Laserstrahlen 112 aus einer Anzahl von unter verschiedenen Raumwinkeln ak, al von dem Laserscanner 106 ausgehenden Laserstrahlen 112k, 112l gebildet sind.

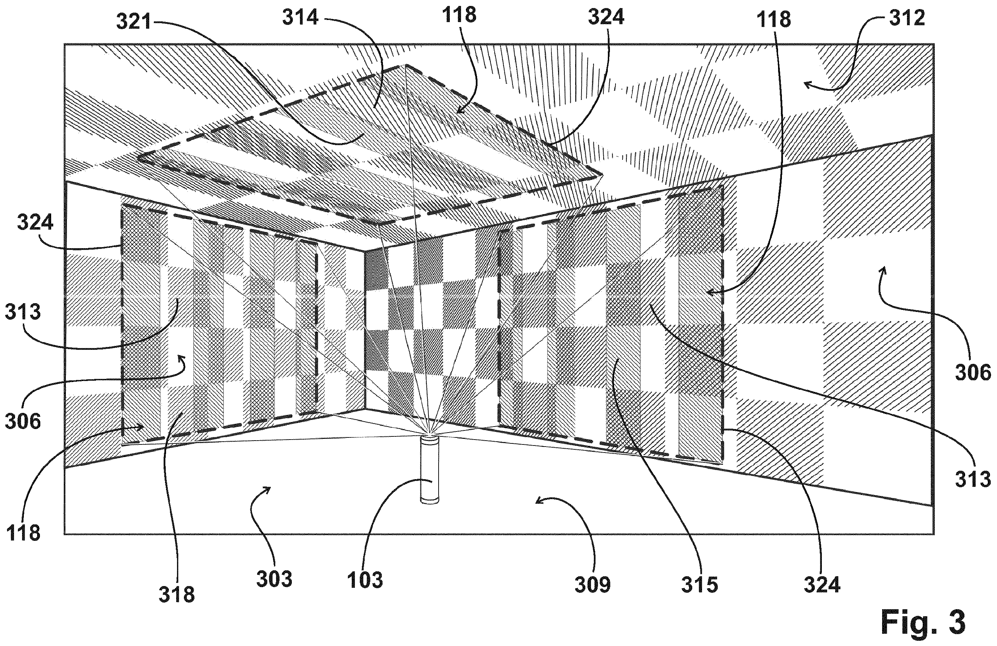

Fig. 3 zeigt in einer anschaulichen perspektivischen Ansicht eine beispielsweise wie bei dem Ausführungsbeispiel gemäß Fig. 1 ausgebildete Scannereinrichtung 103, die in einem objektfreien Kalibrierraum 303 angeordnet ist. In der Ausführung gemäß Fig. 3 ist der Kalibrierraum 303 von zwei Seitenwänden 306, einer Bodenwand 309 und einer Deckwand 312 umgrenzt, deren raumfeste Koordinaten bekannt sind. Bei dem dargestellten Kalibrierraum 303 sind die Seitenwände 306, die Bodenwand 309 und die Deckwand 312 im Wesentlichen paarweise rechtwinklig zueinander ausgerichtet.

Weiterhin ist aus der Darstellung gemäß Fig. 3 ersichtlich, dass die Seitenwände 306 und die Deckwand 312 des Kalibrierraums 303 zum Aufspannen und Festlegen eines systemeigenen Koordinatensystems zumindest in Beaufschlagungsbereichen 118 jeweils mit einem vorbekannten, in Fig. 3 mit einem steigend gestreift repräsentierten Kalibriermuster 313, 314 fest belegt oder zeitweilig beaufschlagt sind. Die Kalibriermuster 313, 314 können grundsätzlich gleich sein, wobei jedoch zur einfacheren Unterscheidbarkeit der Raumrichtungen in dem Koordinatensystem der Scannereinrichtung 103 die Kalibriermuster 313, 314 auch zumindest paarweise oder völlig voneinander verschieden sein können.

Zum Kalibrieren der Scannereinrichtung 103, die hierfür in dem objektfreien Kalibrierraum 303 an einer sehr genau bekannten Kalibrierposition auf der Bodenwand 309 angeordnet ist, gibt die Scannereinrichtung 103 Laserstrahlen 112 in einer gegenüber der zeitlichen Auflösung der Kamera 109 der Scannereinrichtung 103 schnellen Abfolge ab, die auf den Seitenwänden 306 und der Deckwand 312 in der Darstellung gemäß Fig. 3 als fallend gestreift repräsentierte Messmuster 315, 318, 321 dargestellt sind. Die Messmuster 315, 318, 321 überlagern in der Darstellung gemäß Fig. 3 räumlich die Kalibriermuster 313, 314, lassen sich von diesen jedoch beispielsweise über Farbfilter spektral getrennt durch die Scannereinrichtung 103 aufnehmen.

Auf der Grundlage der bekannten raumfesten Koordinaten der Seitenwände 306 sowie der Deckwand 312 des Kalibrierraums 303, der aufgenommenen Struktur der Kalibriermuster 313, 314 und der sehr genau bekannten Kalibrierposition der Scannereinrichtung 103 lässt sich die Scannereinrichtung 103 mit den Messmustern 315, 318, 321 in dem Sinn in systemeigenen Raumkoordinaten sehr genau kalibrieren, dass sich, wie weiter unten näher erläutert, in nachfolgenden Messschritten aufgrund der nun bekannten, räumlich vorbestimmten Verformung der Messmuster 315, 318, 321 auf die zu bestimmende Topographie einer von den Messmustern 315, 318, 221 beaufschlagten Oberfläche im Rahmen der Genauigkeit bei dem Bestimmen der Kalibrierposition sehr genau rückrechnen lässt.

Bei der Ausführung gemäß Fig. 3 sind die Messmuster 315, 318, 321 durch rechteckig oder quadratisch ausgebildete Kacheln von Subbereichen hoher Intensität der Laserstrahlen 112 und Subbereichen von gegenüber der hohen Intensität niedrigerer oder gar verschwindender Intensität realisiert, so dass ein Kachelmuster ausgebildet ist.

Bei einer abgewandelten Ausführung bestehen die Messmuster 315, 318, 321 als Subbereiche aus parallelen Streifen hoher und niedriger beziehungsweise verschwindender Intensität, so dass ein Streifenmuster vorliegt. Das Streifenmuster als Messmuster 315, 318, 321 ist dabei zweckmäßigerweise so ausgebildet, dass die Streifen hoher und niedriger beziehungsweise verschwindender Intensität in etwa gleich breit sind.

Die Messmuster 315, 318, 321 sind mit der Kamera 109 in jeweils einem schematisch vereinfacht rechteckig dargestellten Blickfeld 324 als Subbereiche unterschiedlicher Intensität flächig erfassbar, da das zeitliche Auflösungsvermögen der Kamera 109 gegenüber der Scangeschwindigkeit des Laserscanners 106 geringer ist.

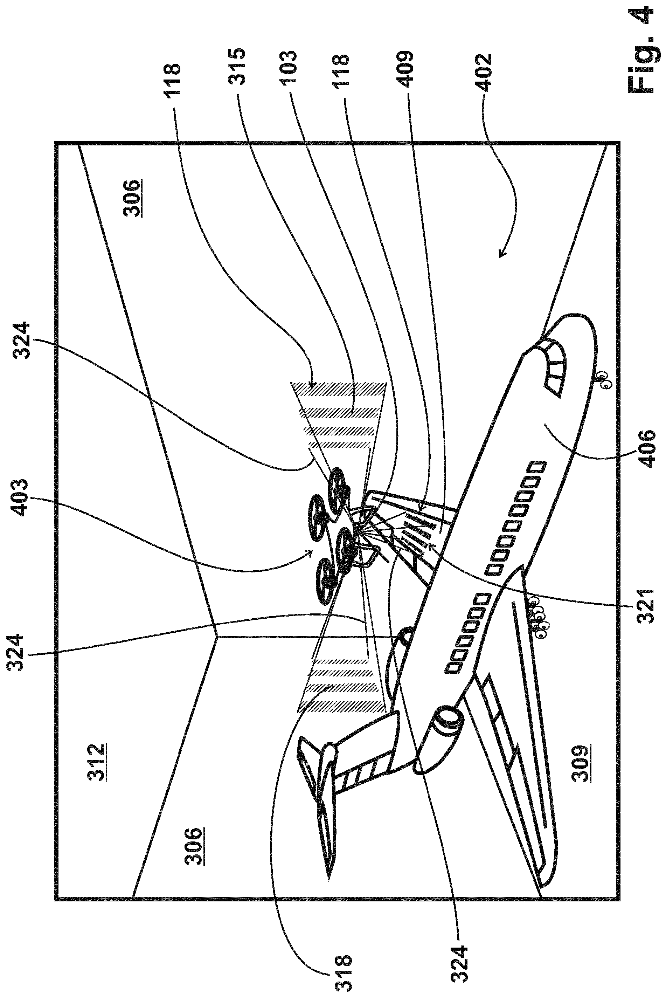

Fig. 4 zeigt in einer anschaulichen perspektivischen Ansicht eine in einem von dem Kalibrierraum 303 üblicherweise, aber nicht notwendigerweise verschiedenen Messraum 402 angeordnete Scannereinrichtung 103 beispielsweise in der Ausführung gemäß Fig. 1, die in der Ausführung gemäß Fig. 4 an einer Drohne 403 als ein mit verhältnismäßig geringer Geschwindigkeit in drei Raumrichtungen gesteuert bewegbares Fluggerät angebracht ist. In der Ausführung gemäß Fig. 4 ist die Scannereinrichtung 103 so eingerichtet, dass Messmuster 315, 318, 321, hier in Gestalt von Streifenmustern mit intensiven Streifen als Subbereichen und gegenüber den intensiven Streifen mit Streifen geringerer Intensität oder auch so gut wie verschwindender Intensität als weiteren Subbereichen, auf die Seitenwände 306 und in Richtung der Bodenwand 309 geworfen werden.

Bei der Ausführung gemäß Fig. 4 ist in dem Messraum 402 als Objekt ein Luftfahrzeug 406 vorhanden, dessen äußere Oberfläche beispielsweise im Rahmen einer periodischen Kontrolle verhältnismäßig genau in absoluten Raumkoordinaten überprüft werden soll, um beispielsweise irreguläre Verformungen festzustellen. Bei der Anordnung der Scannereinrichtung 103 gemäß Fig. 4 wird hierfür beispielsweise ein auf einem Tragflügel 409 gelegener, dem Boden 309 abgewandter Beaufschlagungsbereich 118 mit einem hier als Streifenmuster vorliegenden Messmuster 321 beaufschlagt und in jeweils einem hierdurch Eckverbindungslinien zu der Scannereinrichtung 103 schematisch rechteckig visualisierten Blickfeld 324 erfasst.

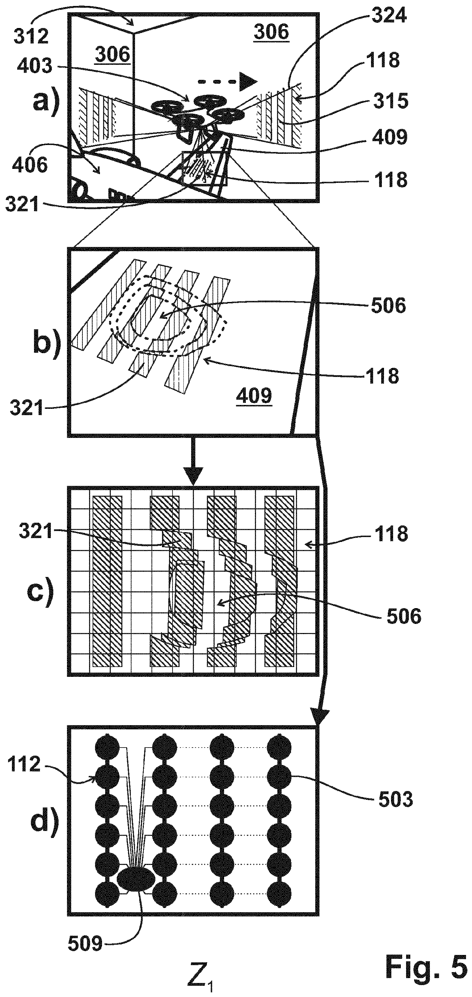

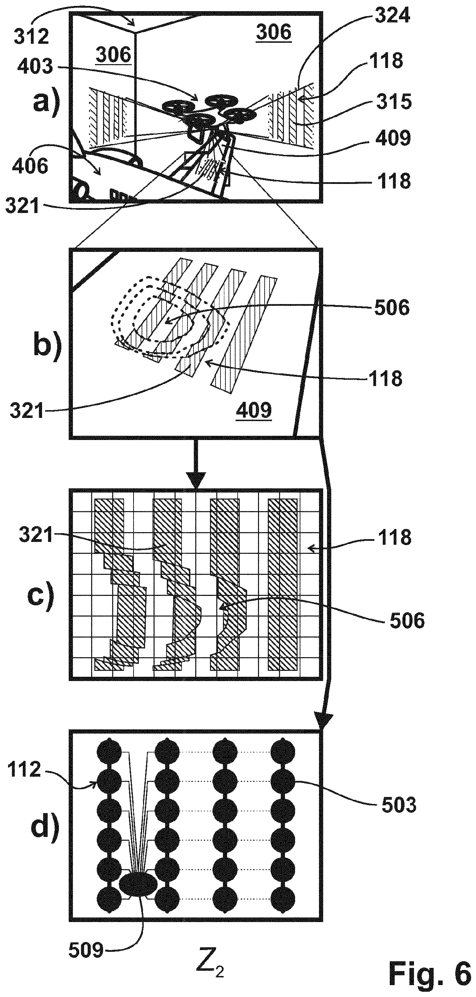

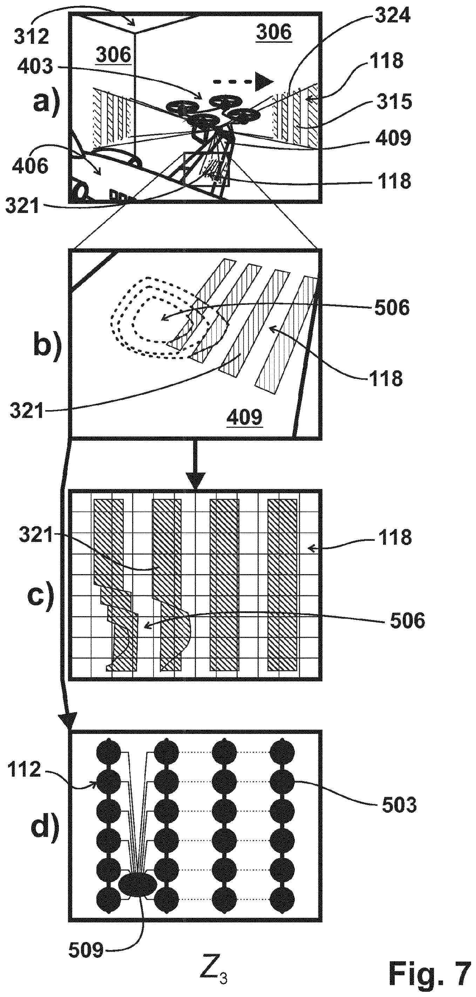

Fig. 5 bis Fig. 7 zeigen jeweils in anschaulichen Teilbildern a) bis d) die prinzipielle Vorgehensweise bei dem dreidimensionalen Erfassen eines hier in Gestalt eines Luftfahrzeugs 406 ausgebildeten Objekts an verschiedenen Messpositionen Z1, Z2, Z3 der Drohne 403 in dem Messraum 402.

Die Teilbilder a) zeigen in der Ausführung gemäß Fig. 4 jeweils eine Messposition der Drohne 403 in einem Teilbereich.

Die Teilbilder b) zeigen jeweils in einer vergrößerten Ansicht den mit dem von den Laserstrahlen 112 gebildeten streifenartigen Messmuster 321 beaufschlagten Beaufschlagungsbereich 118 auf dem Tragflügel 409 an den verschiedenen Messpositionen Z1, Z2, Z3 der Drohne 403.

Die Teilbilder c) wiederum zeigen jeweils die von der Kamera 106 aufgenommenen zweidimensionalen Bilder des jeweils mit Laserstrahlen 112 beaufschlagten Beaufschlagungsbereichs 118.

Die Teilbilder d) schließlich zeigen jeweils anschaulich die Lage von von den Laserstrahlen 112 beaufschlagten Messpunkten 503 sowie noch sehr schematisch die Fusionierung der Raumpunktdaten dieser Messpunkte 503 in einer Rekonstruktionseinheit 509.

Aus den Teilbildern b) von Fig. 5 bis Fig. 7 ist ersichtlich, dass in dem von den Laserstrahlen 112 beaufschlagten Beaufschlagungsbereich 118 auf dem Tragflügel 409 das Messmuster 321 nicht nur durch die gewölbte Kontur des Tragflügels 409, sondern auch durch einen schematisch dargestellten irregulären und daher potenziell schadensverdächtigen Verformungsbereich 506 verformt ist, was die aufgrund der spezifischen Aufnahmesituation rein geometrisch bedingten Verzerrungen des Messmusters 321 an den Messpositionen Z1, Z2, Z3 überlagert.

Die Teilbilder c) von Fig. 5 bis Fig. 7 wiederum zeigen die aus den beaufschlagten Beaufschlagungsbereichen 118 gewonnenen Intensitätsbilder, aus denen ersichtlich ist, wie sich bei Verlagern des jeweiligen Beaufschlagungsbereichs 118 und damit des Messmusters 321 über den Verformungsbereich 506 hinweg die oberflächenspezifischen Verformungen das Messmuster 321 unterschiedlich und für den Verformungsbereich 506 charakteristisch verformen.

Zusammen mit den aus den einzelnen Messpunkten 503 des Beaufschlagungsbereichs 118, die von einem Laserstrahl 112 zeitweilig beaufschlagt sind, gewonnenen Raumpunktdaten in Gestalt von Winkelwerten αij und Abstandswerten dij für den i-ten Messpunkt an der j-ten Messposition Zj lassen sich, wie nachfolgend näher erläutert, Objekte dreidimensional in Gestalt von Raumpunktdaten unter Eliminieren einer relativ langsamen Bewegung der Scannereinrichtung 103 bestimmen.

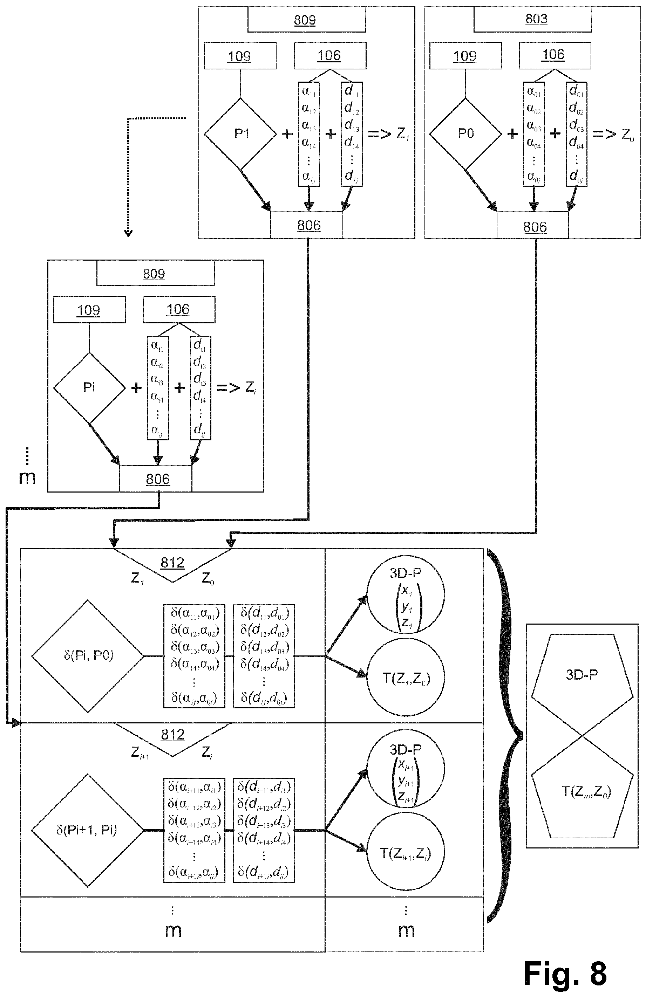

Fig. 8 zeigt in einem Ablaufschema ein Ausführungsbeispiel für ein Durchführen eines Verfahrens gemäß der Erfindung.

In einem Anfangsschritt 803 mit einer, wie im Zusammenhang mit Fig. 3 erläutert, kalibrierten Scannereinrichtung 103 wird mit dem Laserscanner 106 in einem zweckmäßigerweise noch von Objekten freien Messraum 402 von Beaufschlagungsbereichen 118 eine Anzahl von Winkelwerten α01, α02 bis α0j sowie eine Anzahl von Abstandswertend d01, d02 bis d0j und mit der Kamera 109 ein Messmusterbild P0 aufgenommen. Diese einer nullten Messposition Z0 als Referenzposition zugeordneten Intensitätsdaten und Raumpunktdaten werden in einem Speicher 806 für die als Anfangsbezug dienende Messposition Z0 abgelegt.

In darauffolgenden m Messschritten 809 mit 1 ≤ i ≤ m werden dann von der Kamera 109 an aufeinanderfolgenden Messpositionen i in dem jetzt mit wenigstens einem Objekt bestückten Messraum 402 eine Anzahl von Messmusterbildern Pi und von dem Laserscanner 106 Raumwinkel αi1, αi2 bis αij sowie Abstände di1, di2 bis dij für jeweils eine Messposition Zi aufgenommen und für jede Messposition Zi in dem Speicher 806 abgelegt.

Anschließend erfolgt in m+1 Vergleichsschritten 812 der paarweise Vergleich von Messmusterbildern (P1, P0) beziehungsweise allgemein (Pi+1, Pi) mit Bestimmen der jeweiligen Differenz δ zwischen Paaren von Raumwinkeln (α11, α01), (α12, α02) bis (αij, α0j) sowie (d11, d01), (d12, d02) bis (dij, d0j) beziehungsweise (α21, α21), (α22, a12) bis (αi+1j, αij) sowie Paaren von Abständen (di21, d11), (d22, d12) bis (di+1j, dij).

Aus diesen m+1 Vergleichsschritten 812 lassen sich zum einen in dem systemeigenen, in dem Messraum 402 festen Koordinatensystem die dreidimensionalen Koordinaten (xi, yi, zi) von Raumpunkten 3D-P im Beaufschlagungsbereich 118 des Objekts und die Trajektorie zwischen der ersten Messposition Z1 und der nullten Messposition Z0 als Referenzposition beziehungsweise bei Vergleich von aufeinanderfolgenden Messpositionen (Zi+1, Zi) die Koordinaten (xi+1, yi+1, zi+1) von Raumpunkten 3D-Pi+1 sowie die Trajektorie T(Zi+1, Zi) zwischen Paaren von Messpositionen (Zi+1, Zi) unter Registrierung im Sinne einer Fusionierung der Raumpunktdaten an den Messpositionen Zi ausgehend von der nullten Messposition Z0 unter Eliminieren der Trajektorie der Scannereinrichtung 103 zu den weiteren Messpositionen Zi durch Anwenden einer Stetigkeitsregel ein dreidimensionales Bild des Objekts in absoluten Koordinaten bestimmen.

Hierzu ist, wie nachfolgend erläutert, neben dem Erfassen der Raumpunktdaten auch das Auswerten der Paare von m Messmusterbildern (Pi+1, Pi) hinsichtlich stetigen beziehungsweise unstetigen Änderungen wesentlich, um verhältnismäßig langsame Bewegungen der Scannereinheit 103, die zu nur stetigen Intensitätsänderungen bei den Messmustern 315, 318, 321 führen, von demgegenüber verhältnismäßig abrupten Änderungen in der Topographie eines Objekts, die zu unstetigen im Sinne von jenseits der Bewegungsgeschwindigkeit der Scannereinrichtung 103 liegenden Intensitätsänderungen zwischen Paaren von Messpositionen (Zi+1, Zi) führen, unterschieden werden.

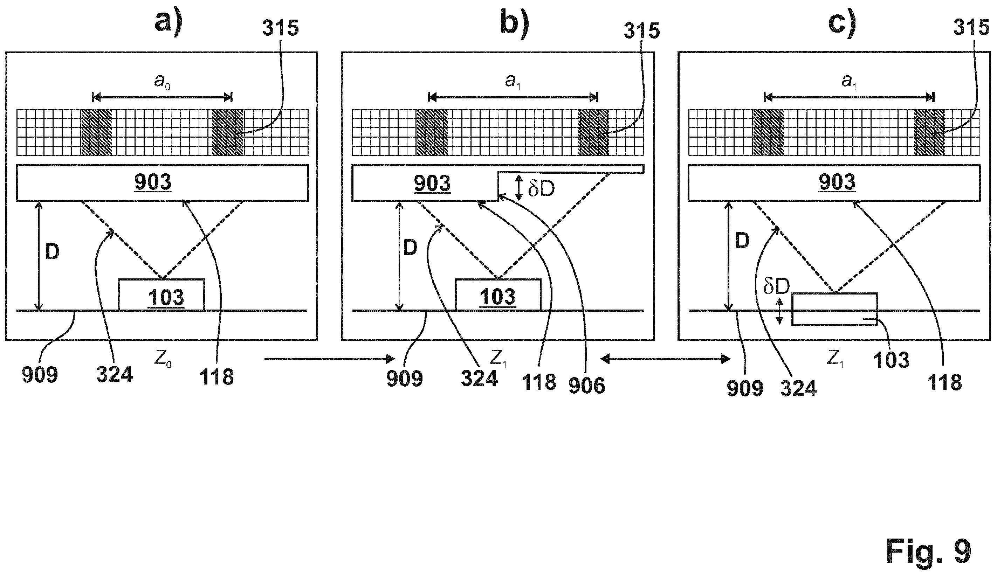

Fig. 9 zeigt in einer anschaulichen Darstellung, wie sich hier charakteristische Abmessungen eines hier ausschnittsweise dargestellten Messmusters 315 bei Bewegung einer Scannereinrichtung 103 in Bezug auf ein Objekt 903 beziehungsweise bei einer Änderung in der Topographie des Objekts 903, hier am Beispiel eines Höhensprungs 906, in einer Dimension ändern. Für die anderen beiden Dimensionen ist die Situation entsprechend. Das Teilbild a) von Fig. 9 zeigt ein Objekt 903 mit einem planen Beaufschlagungsbereich 118, der von Laserstrahlen 112 einer Scannereinrichtung 103 beaufschlagt ist, wobei der Beaufschlagungsbereich 118 und eine Referenzebene 909, in der die Scannereinrichtung 103 angeordnet ist, einen Abstand D aufweisen. Bei dieser Anordnung weisen charakteristische Merkmale des Messmusters 315 einen Abstand a0 voneinander auf.

Weist hingegen der Beaufschlagungsbereich 118 des Objekts 903 zwischen den charakteristischen Merkmalen des Messmusters 319 einen Höhensprung 906 mit dem Wert δD auf, ändert sich bei der gleichen Anordnung der Scannereinrichtung 103 in der Referenzebene 909 entsprechend dem Teilbild a) der Abstand zwischen den charakteristischen Merkmalen des Messmusters 315 auf den Abstand a1.

Andererseits ergibt sich ein entsprechender Abstand a1 zwischen charakteristischen Merkmalen des Messmusters 315 auch bei einem Bewegen der Scannereinrichtung 103 um den Wert δD aus der Referenzebene 909 in Bezug auf das Objekt 903, so dass es für ein korrektes dreidimensionales Erfassen eines Objekts 903 wesentlich ist, die Raumpunktdaten und die Intensitätsdaten mit dem durch die Topographie des Objekts 903 verformten Messmuster 315 zu überlagern, um unter Ausnutzen einer im Rahmen von vorbestimmten Grenzwerten stetigen Überbestimmung dieser Daten im Sinne eines fließenden, stetigen Übergangs des Messmusters 315 beim Übergang zwischen Messpositionen Zi, diskriminierbar durch ein Diskriminierglied, die lediglich zu Bewegungsunschärfen führende Relativbewegung der Scannereinrichtung 103 und damit allgemein der Abstandsmesseinheit sowie der Bildaufnahmeeinheit zu eliminieren.

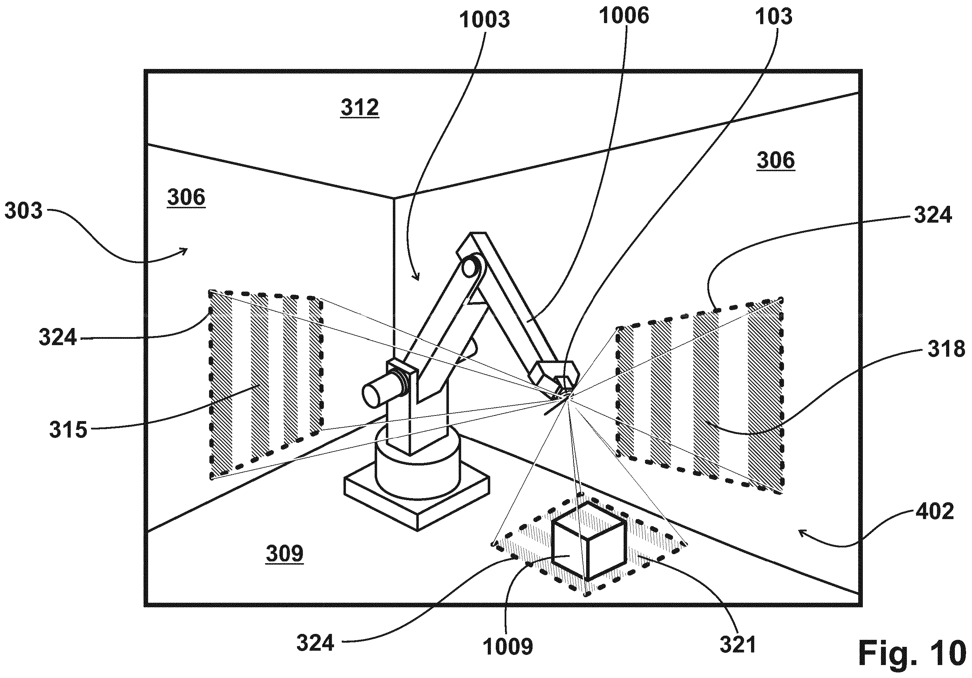

Fig. 10 zeigt in einer anschaulichen perspektivischen Darstellung einen Roboter 1003, der über wenigstens einen beweglichen Roboterarm 1006 verfügt, der mit einem freien Ende ausgestattet ist. An dem freien Ende des Roboterarms 1006 ist bei dieser Ausführung die Scannereinrichtung 103 angeordnet, so dass sich bei Bewegen des freien Endes des Roboterarms 1006 im Raum ein auf einer Bodenwand 309 eines Messraums 402 angeordnetes Objekt 1009 dreidimensional unter Referenzierung auf die die Seitenwände 306 sowie die Bodenwand 309 des Messraums 402 beaufschlagenden Messmuster 315, 318, 321 erfassen lässt.

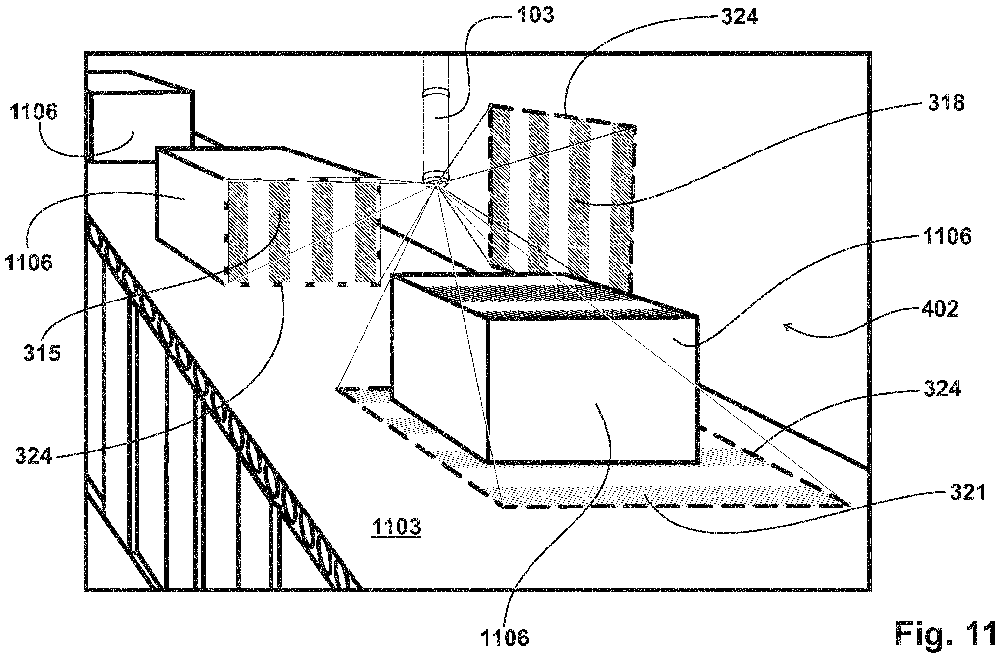

Fig. 11 zeigt in einer anschaulichen perspektivischen Ansicht eine Scannereinrichtung 103, die bei dieser Ausführung feststehend oberhalb eines in einem Messraum 402 vorhandenen Förderbandes 1103 angeordnet ist, auf dem in einer Richtung bewegbar eine Anzahl von Objekten 1106 angeordnet sind. Aufgrund dieser Ausführung lässt sich durch die über das Förderband 1103 vermittelte Relativbewegung zwischen der Scannereinrichtung 103 und den Objekten 1106 unter Auswerten der Raumpunktdaten sowie der von den Messmustern 315, 318, 321 gewonnenen Intensitätsdaten jedes Objekt 1106 und bei dieser Ausführung insbesondere die Gestalt sowie zumindest näherungsweise das Volumen der Objekte 1106 bestimmen.

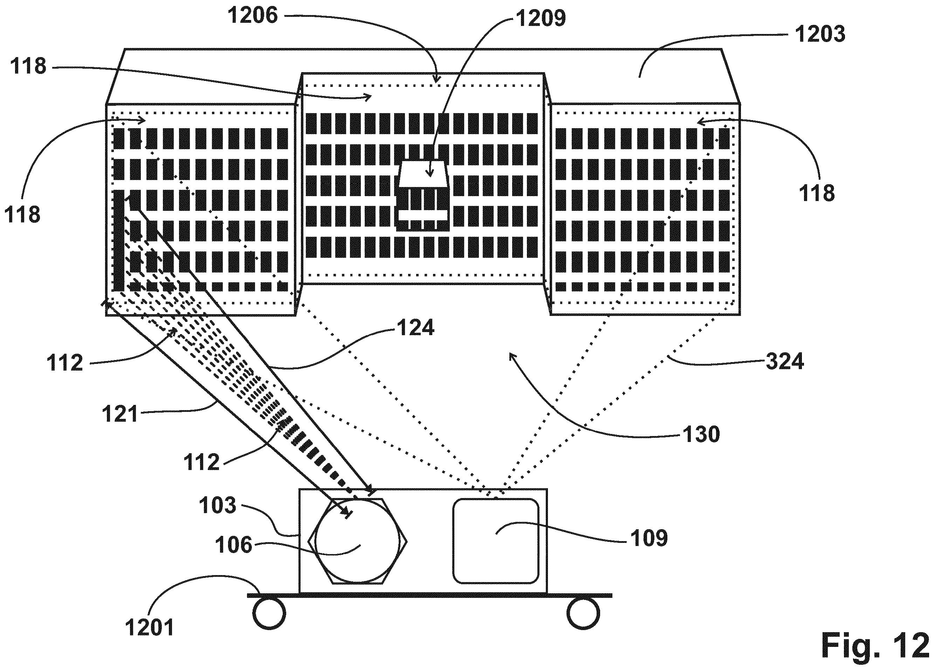

Fig. 12 zeigt in einer anschaulichen perspektivischen Ansicht den Einsatz einer auf einer mit Rollen versehenen Plattform 1201 angeordneten Scannereinrichtung 103 bei einer beispielhaften Vorrichtung gemäß der Erfindung beim Vermessen der Außenseite eines Gebäudes 1203 als Objekt. Mit der Erfindung lassen sich beispielsweise Rücksprünge 1206 oder Vorsprünge 1209 in der der Scannereinrichtung 103 zugewandten Fassade des Gebäudes 1203 als Beaufschlagungsbereich bestimmen.

## Patentansprüche

1. Vorrichtung zum dreidimensionalen Erfassen wenigstens
eines Objekts (406, 903, 1009, 1106, 1203) mit einer Scannereinrichtung (103), in die eine optische Abstandsmesseinheit (106) integriert ist, mit der mit einem Messstrahl (112) an Messpositionen (Zi) punktweise in Gestalt von Raumpunktdaten der Raumwinkel (αij) und der Abstand (dij) zu Messpunkten (127) auf wenigstens ein Objekt (406, 903, 1009, 1106, 1203) aufweisenden Beaufschlagungsbereichen
(118) bestimmbar sind,
mit einer Bildaufnahmeeinheit (109) der Scannereinrichtung (103), mit der zweidimensionale Messbilder (Pi) als Intensitätsdaten erfassbar sind,
mit einer Rekonstruktionseinheit (509), die mit der Abstandsmesseinheit (106) sowie mit der Bildaufnahmeeinheit (109) in Verbindung steht und mit der durch Überlagern der Raumpunktdaten sowie der Intensitätsdaten eine dreidimensionale Darstellung des oder wenigstens eines
Objekts (406, 903, 1009, 1106, 1203) erzeugbar sind,
wobei die Abstandsmesseinheit (106) an jeder Messposition (Zi) dazu eingerichtet ist, den Messstrahl (112) so auszusenden, dass auf den von dem Messstrahl (112) beaufschlagten Beaufschlagungsbereichen (118) wenigstens ein definiertes Messmuster (315, 318, 321) aus mit hoher Intensität beaufschlagten Subbereichen und nicht oder gegenüber den Subbereichen mit hoher Intensität mit geringerer Intensität
beaufschlagten Subbereichen gebildet ist,
wobei das zeitliche Auflösungsvermögen der Bildaufnahmeeinheit (109) gegenüber einer Scangeschwindigkeit der Abstandsmesseinheit (106) geringer ist,
wobei die Bildaufnahmeeinheit (109) dazu eingerichtet ist, die Beaufschlagungsbereiche (118) mit dem oder einem Messmuster (315, 318, 321) als Messmusterbilder (Pi) zu erfassen, und wobei die Rekonstruktionseinheit (509) dazu
eingerichtet ist, durch aufeinanderfolgendes Überlagern von Raumpunktdaten und Messmusterbildern (Pi) zum einen eine räumliche Bewegung der Abstandsmesseinheit (106) sowie der Bildaufnahmeeinheit (109) zwischen Messpositionen (Zi) zu bestimmen
und zum anderen durch Überlagern von Raumpunktdaten sowie von Messmusterbildern (Pi) das oder wenigstens ein Objekt (406, 903, 1009, 1106, 1203) in einem raumfesten Koordinatensystem zu erfassen,
**dadurch gekennzeichnet, dass**
die Scannereinrichtung (103) eingerichtet ist, zur Kalibrierung Laserstrahlen in einer gegenüber der zeitlichen Auflösung der Bildaufnahmeeinheit (109) schnellen Abfolge mit einem Messmuster (315, 318, 321) auf ein Kalibriermuster (313, 314) räumlich überlagernd abzugeben, um die Scannereinrichtung (103) in systemeigenen Raumkoordinaten zu kalibrieren.

2. Vorrichtung nach Anspruch 1, **dadurch gekennzeichnet, dass** die Rekonstruktionseinheit (509) ein Diskriminierglied aufweist, mit dem in Abhängigkeit eines vorbestimmten Schwellwerts zu einer Änderung von Intensitätsdaten in Bezug auf Raumpunktdaten eng benachbarter Messpunkte eine Änderung von Intensitätsdaten entweder einer räumlichen Relativbewegung oder einer Struktur des oder wenigstens eines Objekts (406, 903, 1009, 1106, 1203) zuweisbar ist.

3. Vorrichtung nach Anspruch 1 oder Anspruch 2, **dadurch gekennzeichnet, dass** die Abstandsmesseinheit (106) und die Bildaufnahmeeinheit (109) raumfest miteinander gekoppelt sind.

4. Vorrichtung nach Anspruch 3, **dadurch gekennzeichnet, dass** die Abstandsmesseinheit (106) und die Bildaufnahmeeinheit (109) an einem sich in einem Raumbereich bewegbaren Gegenstand (403, 1006, 1201) angebracht sind.

5. Vorrichtung nach Anspruch 4,
**dadurch gekennzeichnet, dass**
der Gegenstand ein Fluggerät (403), ein Roboterarm (1006) oder eine mit Rollen versehene Plattform (1201) ist.

6. Verfahren zum dreidimensionalen Erfassen wenigstens eines Objekts (406, 903, 1009, 1106, 1203) mit einer Vorrichtung nach einem der Ansprüche 1 bis 5 mit den Schritten
- an einer Kalibrierposition in einem objektfreien Kalibrierraum (303) Erfassen von Raumpunktdaten und von Intensitätsdaten von Kalibriermustern (313, 314) auf Wänden 306, 309, 312) des Kalibrierraums (303) sowie von in Beaufschlagungsbereichen (118) den Kalibriermustern (313, 314) überlagerten Messmustern (315, 318, 321) und Kalibrieren der Scannereinrichtung (103) auf systemeigene Raumkoordinaten,
- Einbringen wenigstens eines Objekts (406, 903, 1009, 1106, 1203) in einen Messraum (402),
- an mehreren Messpositionen (Zi) in dem Messraum (402) Erfassen von Raumwinkeln (αij) und Abständen (dij) zu Messpunkten (127) in Gestalt von Raumpunktdaten,
- an mehreren Messpositionen (Zi) in dem Messraum (402) Erfassen von Musterbildern (Pi) von Messmustern (315, 318, 321) in Gestalt von Intensitätsdaten und
- Überlagern der Raumpunktdaten und der Intensitätsdaten zum Erzeugen einer dreidimensionalen Darstellung des oder wenigstens eines Objekts (406, 903, 1009, 1106, 1203) dergestalt, dass durch Referenzieren der Intensitätsdaten an Messpositionen (Zi) auf die Intensitätsdaten der Referenzposition ein Referenzieren auf systemeigene Raumkoordinaten erfolgt und dass durch Vergleichen von Messbildern (Pi) an aufeinanderfolgenden Messpositionen (Zi) ein Eliminieren der Bewegung zwischen den Messpositionen (Zi) erfolgt.

7. Verfahren nach Anspruch 6, **dadurch gekennzeichnet, dass** die Raumpunktdaten von drei winklig oder rechtwinklig zueinander ausgerichteten planen Beaufschlagungsbereichen (118) erfasst werden.

8. Verfahren nach Anspruch 6 oder Anspruch 7, **dadurch gekennzeichnet, dass** das oder ein Messmuster (315, 318, 321) ein Streifenmuster und/oder ein Kachelmuster ist.

## Claims

1. Device for the three-dimensional detection of at least one object (406, 903, 1009, 1106, 1203) with a scanner device (103) into which an optical distance measuring unit (106) is integrated, with which, with a measuring beam (112) at measuring positions (Zi) point-by-point in the form of spatial point data the spatial angle (αij) and the distance (dij) to measuring points (127) on exposure areas (118) having at least one object (406, 903, 1009, 1106, 1203) can be determined,
with an image capturing unit (109) of the scanner device (103), with which two-dimensional measurement images (Pi) can be captured as intensity data,
with a reconstruction unit (509) which is connected to the distance measuring unit (106) and to the image capturing unit (109) and with which, by superimposing the spatial point data and the intensity data, a three-dimensional representation of the object or at least one object (406, 903, 1009, 1106, 1203) can be produced,
wherein the distance measuring unit (106) is configured at each measuring position (Zi) to emit the measuring beam (112) in such a way that at least one defined measurement pattern (315, 318, 321) is formed on the exposure areas (118) exposed to the measuring beam (112) comprising sub-areas exposed to high intensity and sub-areas that are not exposed or are exposed to lower intensity than the sub-areas exposed to high intensity,
wherein the time resolution of the image capturing unit (109) is lower than a scanning speed of the distance measuring unit (106),
wherein the image capturing unit (109) is configured to capture the exposure areas (118) with the or a measurement pattern (315, 318, 321) as measurement pattern images (Pi), and wherein the reconstruction unit (509) is configured to determine, firstly, by successively superimposing spatial point data and measurement pattern images (Pi), a spatial movement of the distance measuring unit (106) and the image capturing unit (109) between measurement positions (Zi),
and, secondly, by superimposing spatial point data and measurement pattern images (Pi) to detect the object or at least one object (406, 903, 1009, 1106, 1203) in a spatially fixed coordinate system,
**characterised in that**
the scanner device (103) is configured to emit spatially superimposed laser beams for calibration in rapid succession relative to the time resolution of the image capturing unit (109) with a measurement pattern (315, 318, 321) onto a calibration pattern (313, 314), in order to calibrate the scanner device (103) in system-specific spatial coordinates.

2. Device according to claim 1, **characterised in that** the reconstruction unit (509) has a discriminator, by which, as a function of a predetermined threshold value for a change in intensity data in relation to spatial point data of closely adjacent measuring points, a change in the intensity data can be assigned either to a spatial relative movement or a structure of the or at least one object (406, 903, 1009, 1106, 1203).

3. Device according to claim 1 or claim 2, **characterised in that** the distance measuring unit (106) and the image capturing unit (109) are coupled to one another at a spatially fixed point.

4. Device according to claim 3, **characterised in that** the distance measuring unit (106) and the image capturing unit (109) are attached to an object (403, 1006, 1201) that can move within a spatial area.

5. Device according to claim 4, **characterised in that** the object is an aircraft (403), a robot arm (1006) or a platform (1201) provided with rollers.

6. Method for the three-dimensional detection of at least one object (406, 903, 1009, 1106, 1203) with a device according to any one of claims 1 to 5, comprising the steps:
- at a calibration position in an object-free calibration space (303), capturing spatial point data and intensity data of calibration patterns (313, 314) on walls (306, 309, 312) of the calibration space (303) and, in exposure areas (118), measurement patterns (315, 318, 321) superimposed on the calibration patterns (313, 314), and calibrating the scanner device (103) to system-specific spatial coordinates,
- placing at least one object (406, 903, 1009, 1106, 1203) into a measuring space (402),
- at several measuring positions (Zi) in the measuring space (402), capturing spatial angles (αij) and distances (dij) to measuring points (127) in the form of spatial point data,
- at several measuring positions (Zi) in the measuring space (402), capturing pattern images (Pi) of measurement patterns (315, 318, 321) in the form of intensity data, and
- superimposing the spatial point data and the intensity data to produce a three-dimensional representation of the object or at least one object (406, 903, 1009, 1106, 1203) in such a way that, by referencing the intensity data at measuring positions (Zi) to the intensity data of the reference position, a reference is made to the system's own spatial coordinates, and in that, by comparing measurement images (Pi) at successive measuring positions (Zi), the movement between the measuring positions (Zi) is eliminated.

7. Method according to claim 6, **characterised in that** the spatial point data is recorded from three planar exposure areas (118) oriented at an angle or at right angles to one another.

8. Method according to claim 6 or claim 7, **characterised in that** the or a measurement pattern (315, 318, 321) is a striped pattern and/or a tile pattern.

## Revendications

1. Dispositif de détection tridimensionnelle d'au moins un objet (406, 903, 1009, 1106, 1203) doté d'un dispositif de balayage (103) intégrant une unité optique de mesure de distance (106),à l'aide de de laquelle, au moyen d'un faisceau de mesure (112) à des positions de mesure (Zi), les angles solides (αij) et la distance (dij) de points de mesure (127) sur des zones d'application (118) présentant au moins un objet (406, 903, 1009, 1106, 1203) peuvent être déterminés point par point sous la forme
de données de point d'espace,
comprenant une unité de capture d'images (109) du dispositif de balayage (103), à l'aide de laquelle des images de mesure bidimensionnelles (Pi) peuvent être capturées en tant que données d'intensité, comprenant une unité de reconstruction (509) qui est en liaison avec l'unité de mesure de distance (106) et avec l'unité de capture d'images (109), et à l'aide de laquelle une représentation tridimensionnelle de l'objet ou dudit au moins un objet (406, 903, 1009, 1106, 1203) peut être générée par superposition des données de point d'espace et des données d'intensité,
l'unité de mesure de distance (106) étant conçue pour émettre, à chaque position de mesure (Zi), le faisceau de mesure (112) de telle sorte qu'au moins un motif de mesure défini (315, 318, 321) soit formé sur les zones d'exposition (118) exposées au faisceau de mesure (112), à partir de sous-zones exposées à une intensité élevée et de sous-zones non exposées ou exposées à une intensité inférieure par rapport aux sous-zones à intensité élevée, la résolution temporelle de l'unité de capture d'images (109) étant inférieure à la vitesse de balayage de l'unité de mesure de distance (106),
l'unité de capture d'images (109) étant conçue pour détecter les zones d'exposition (118) présentant le ou un motif de mesure (315, 318, 321) en tant qu'images de motif de mesure (Pi), et l'unité de reconstruction (509) étant conçue
pour déterminer, d'une part, un mouvement spatial de l'unité de mesure (106) et de l'unité de capture d'images (109) entre des positions de mesure (Zi), par superposition successive de données de point d'espace et d'images de motif de mesure (Pi),
et, d'autre part, détecter l'objet ou au moins un objet (406, 903, 1009, 1106, 1203) dans un système de coordonnées fixe dans l'espace par superposition de données de point d'espace et d'images de motif de mesure (Pi),
**caractérisé en ce que**
le dispositif de balayage (103) est conçu, aux fins de l'étalonnage, pour émettre des faisceaux laser selon une séquence rapide par rapport à la résolution temporelle de l'unité de capture d'images (109) en superposant spatialement un motif de mesure (315, 318, 321) à un motif d'étalonnage (313, 314) pour étalonner le dispositif de balayage (103) dans des coordonnées spatiales propres au système.

2. Dispositif selon la revendication 1, **caractérisé en ce que** l'unité de reconstruction (509) comporte un élément de discrimination, à l'aide duquel, en fonction d'un seuil prédéterminé concernant une modification des données d'intensité par rapport aux données de point d'espace de points de mesure étroitement adjacents, une modification des données d'intensité peut être attribuée soit à un mouvement spatial relatif, soit à une structure de l'objet ou d'au moins un objet (406, 903, 1009, 1106, 1203).

3. Dispositif selon la revendication 1 ou la revendication 2, **caractérisé en ce que** l'unité de mesure de distance (106) et l'unité de capture d'images (109) sont couplées l'une à l'autre de manière fixe dans l'espace.

4. Dispositif selon la revendication 3, **caractérisé en ce que** l'unité de mesure de distance (106) et l'unité de capture d'images (109) sont montées sur un objet (403, 1006, 1201) mobile dans une zone spatiale.

5. Dispositif selon la revendication 4, **caractérisé en ce que** l'objet est un appareil volant (403), un bras robotisé (1006) ou une plate-forme à roulettes (1201).

6. Procédé de détection tridimensionnelle d'au moins un objet (406, 903, 1009, 1106, 1203) à l'aide d'un dispositif selon l'une des revendications 1 à 5, comprenant les étapes suivantes
- à une position d'étalonnage dans un espace d'étalonnage sans objet (303), acquérir des données de point d'espace et des données d'intensité de motifs d'étalonnage (313, 314) sur des parois (306, 309, 312) de l'espace d'étalonnage (303), ainsi que de motifs de mesure (315, 318, 321) superposés aux motifs d'étalonnage (313, 314) dans des zones d'exposition (118), et étalonner le dispositif de balayage (103) par rapport à des coordonnées spatiales propres au système,
- introduire au moins un objet (406, 903, 1009, 1106, 1203) dans un espace de mesure (402),
- à plusieurs positions de mesure (Zi) dans l'espace de mesure (402), acquérir des angles solides (αij) et des distances (dij) de points de mesure (127), sous la forme de données de points d'espace,
- à plusieurs positions de mesure (Zi) dans l'espace de mesure (402), acquérir des images de motif (Pi) de motifs de mesure (315, 318, 321) sous la forme de données d'intensité, et
- superposer les données de point d'espace et les données d'intensité pour générer une représentation tridimensionnelle de l'objet ou d'au moins un objet (406, 903, 1009, 1106, 1203) de telle sorte qu'en référençant les données d'intensité à des positions de mesure (Zi) par rapport aux données d'intensité de la position de référence, on effectue un référencement par rapport à des coordonnées spatiales propres au système, et qu'en comparant les images de mesure (Pi) à des positions de mesure (Zi) successives, on effectue une élimination du mouvement entre les positions de mesure (Zi).

7. Procédé selon la revendication 6, **caractérisé en ce que** les données de point d'espace sont acquises à partir de trois zones d'exposition planes (118) orientées de manière inclinée ou perpendiculairement l'une par rapport à l'autre.

8. Procédé selon la revendication 6 ou la revendication 7, **caractérisé en ce que** le ou un motif de mesure (315, 318, 321) est un motif à bandes et/ou un motif à carreaux.
